# EUROPEAN PATENT APPLICATION

(11) **EP 1 548 217 A2**
(43) Date of publication of application: **29.06.2005**
(21) Application number: 04030117.8
(22) Date of filing: 20.12.2004
(51) Int. Cl.: E05D 3/02

(54) **Self-locking safety hinge, particularly for opening and closing an access panel**

(30) Priority: 23.12.2003 IT BO20030128
(71) Applicant: G.Z. International di Garbin O. e C. S.a.s., 44027 Migliarino (Prov. of Ferrara) (IT)
(72) Inventor: Garbin, Orlando, 44027 Migliarino (Prov. of Ferrara) (IT)
(74) Representative: Modiano, Guido, Dr.-Ing.

(57) **Abstract**

A self-locking safety hinge, particularly for opening and closing an access panel, comprising a first fixed element (2) and a second movable element (3), which is rigidly coupled to the access panel and is rotatably coupled to the first element (2), further comprising elements (4) for articulation between the first element (2) and the second element (3), which can be operated manually and selectively from a free rotation configuration, in which the access panel can be moved from the open position to the closed position and vice versa, to a safety configuration, in which the access panel is locked stably in the open position by way of retention means (5).

## Description

The present invention relates to a self-locking safety hinge, particularly for opening and closing an access panel.

Many modem products, such as for example electrical household appliances and particularly cookers, are conveniently provided with a closure cover or access panel, which allows to protect the cooking plates when they are not being used and also constitutes a convenient supporting surface.

The access panel is usually articulated to the footing of the cooker by way of a pair of hinges of a substantially conventional type, made of various materials and having various shapes, in order to meet predominantly aesthetic and dimensional requirements.

The hinges usually used to manufacture cookers; however, are rather dangerous, since the access panel, which is often significantly massive and heavy, once arranged in the open position, may fall accidentally and inadvertently back into the closure position, thus causing domestic accidents or other inconveniences and damaging the cooker itself as well as other items.

The aim of the present invention is to obviate the above-cited drawback, by providing a hinge that allows to keep the cover of the cooker safely in the open position, thus eliminating the risk of it accidentally closing, causing damage or accidents to people or items.

Within this aim, an object of the present invention is to provide a hinge that is extremely versatile and can be used in the production of the most disparate types of cooker.

Another object of the present invention is to provide a hinge that is constituted by the smallest possible number of components and is at the same time sturdy and reliable.

Another object of the present invention is to provide a hinge that is simple, relatively easy to provide in practice, safe in use, effective in operation, and has a relatively low cost.

This aim and these and other objects that will become better apparent hereinafter are achieved by the present self-locking safety hinge, particularly for opening and closing an access panel, comprising a first fixed element and a second movable element, which is rigidly coupled to the access panel and is rotatably associated with the first fixed element, characterized in that it comprises means for mutual articulation between the first and second elements, which can be operated manually and selectively from a free rotation configuration, in which the access panel can be moved from the open position to the closed position and vice versa, to a locking configuration, in which the access panel is retained stably in the open position by way of retention means.

Further characteristics and advantages of the present invention will become better apparent from the following detailed description of a preferred but not exclusive embodiment of a self-locking safety hinge particularly for opening and closing an access panel according to the invention, illustrated by way of non-limiting example in the accompanying drawings, wherein:
Figure 1 is a perspective view of the hinge according to the invention, with the access panel in the open position;
Figure 2 is a side elevation view of the hinge, with the access panel in the open position;

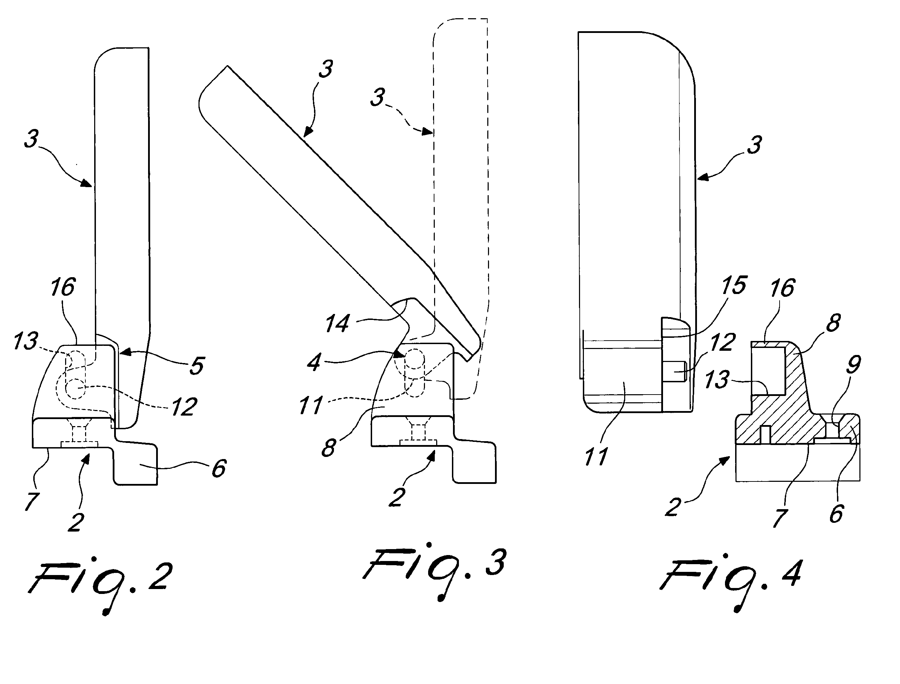

Figure 3 is a side elevation view of the hinge, during access panel closure;
Figure 4 is a partially sectional exploded front view of said hinge, with the access panel in the open position.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

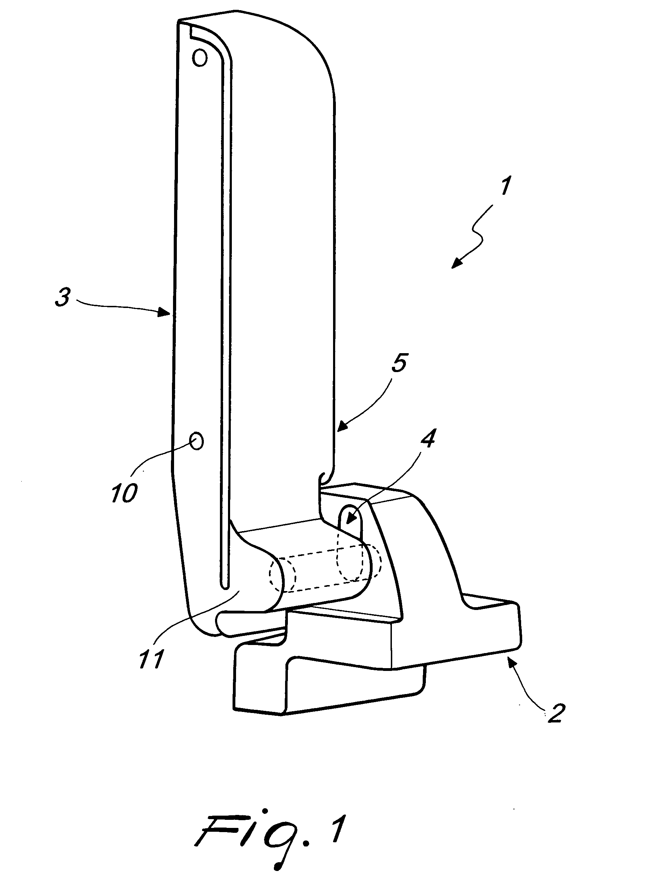

With reference to Figure 1, the reference numeral 1 generally designates a self-locking safety hinge, particularly for opening and closing an access panel, according to the invention.

The hinge described hereinafter is of the type that is fitted in pairs and is adapted to allow the opening and closure of the access panel of the cooker (not shown in the figures for the sake of simplicity), so as to protect the cooking plates and also constitute a supporting surface for items. However, it is noted here that it can also be used advantageously in various other applications, outside the field of electrical household appliances, whenever it is necessary to ensure that the movable access panel can be locked in the open position, thus avoiding the risk of it falling back accidentally.

The hinge comprises a first fixed element, generally designated by the reference numeral 2, which is rigidly coupled to the footing of the cooker, and a second movable element, generally designated by the reference numeral 3, which is rigidly coupled to the access panel and is coupled rotatably to the first element. According to the invention, the hinge comprises articulation elements, generally designated by the reference numeral 4, which are provided between the first element 2 and the second element 3 and can be operated selectively and manually on the access panel from a free rotation configuration, in which the access panel can be moved from the (horizontal) closed position to the (vertical) open position and vice versa, to a safety configuration, in which the access panel is locked in the open position by way of retention means, generally designated by the reference numeral 5, and is prevented from moving except by means of an intentional manual intervention.

The first fixed element 2 comprises a base 6, which forms in a lower region a sort of recess 7 for reference on the footing of the cooker, from which a substantially parallelepipedal tab 8 protrudes upward. The base 6 of the first element 2 is affected by at least one through hole 9 for fixing to the footing of the cooker by way of screw means.

The second element 2 of the hinge is preferably flat and elongated and is affected laterally by holes 10 for fixing to the access panel, for example by way of screws or other equivalent connecting elements. The second element 3 forms at the front, at the lower portion, a protrusion 11 that is substantially semicylindrical and has a horizontal axis.

Advantageously, the elements 4 for articulation between the first element 2 and the second element 3 comprise a cylindrical pivot 12, which has a horizontal axis and is rigidly coupled to the protrusion 11, from which it extends laterally; said pivot is accommodated slidingly, with slight play, in an elongated receptacle 13, which is preferably shaped like a vertical slot and is provided laterally to the tab 8 of the first element 2.

When the articulation elements 4 are in the configuration for free rotation of the access panel, the pivot 12 is arranged substantially at the lower end of the receptacle 13, a position in which, as mentioned, it is possible to open and close the access panel without any difficulty; when the articulation means 4 are in the safety locking configuration, the pivot 12 is arranged at the upper end of the receptacle 13, a position in which the retention means 5 allow to keep the second element 3, and therefore the access panel, open without it being able to close inadvertently.

The means 5 for retaining the access panel in the open position are constituted by a profile 14, which is formed advantageously by the edge of a recess 15 provided laterally in the second element 3 at the protrusion 11 and cooperates with a supporting surface 16 provided on the tab 8 of the first element. When the pivot 12 is arranged at the lower end of the receptacle 13, the profile 14 substantially abuts against the supporting surface 16: this prevents the rotation of the second element 3 about the axis of the pivot 12 and therefore the access panel cannot be moved from the open position. When the pivot 12 is instead arranged at the upper end of the receptacle 13, the profile 14 is substantially spaced from the supporting surface 16 and therefore the access panel can be turned manually about the axis of the pivot 12, so as to open and close it.

The operation of the hinge according to the invention is as follows. When the access panel is in the closed position, the surface of the recess 15 of the second element 3 lies on the supporting surface 16 of the first element 2, while the pivot 12 is arranged at the lower end of the receptacle 13. By turning the access panel manually, the pivot 12 rises progressively along the receptacle 13, by contact between the surface of the recess 15 and the supporting surface 16, until it reaches the upper end of said receptacle: once the rotation of the access panel has been completed, the pivot 12 descends again, due to the weight of the access panel, to the lower end of the receptacle 13, while the profile 14 moves into contact with the supporting surface 16, thus locking said access panel in the open position without it being able to then close again.

To close the access panel, said access panel must be slightly lifted manually in a vertical direction, so as to place the pivot 12 at the upper end of the receptacle 13, i.e., in the configuration for the free rotation of the articulation elements 4.

It has thus been shown that the invention has achieved the intended aim and objects. The self-locking hinge, which is simple and low-cost in its construction, allows to keep the access panel effectively in the open position, thus eliminating the accidents and drawbacks caused by its accidental sudden reclosure.

The invention thus conceived is susceptible of numerous modifications and variations, all of which are within the scope of the appended claims.

All the details may further be replaced with other technically equivalent ones.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and dimensions, may be any according to requirements without thereby abandoning the scope of the protection of the appended claims.

The disclosures in Italian Patent Application No. BO2003U000128, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A self-locking safety hinge, particularly for opening and closing an access panel, comprising a first fixed element (2) and a second movable element (3), which is rigidly coupled to said access panel and is rotatably associated with said first element (2), **characterized in that** it comprises elements (4) for mutual articulation between said first element (2) and said second element (3), which can be operated manually and selectively from a free rotation configuration, in which said access panel can be moved from the open position to the closed position and vice versa, to a safety configuration, in which said access panel is locked stably in the open position by way of retention means (5).

2. The hinge according to claim 1, **characterized in that** said articulation elements (4) can be operated by manually lifting said access panel and comprise a pivot (12) that has a horizontal axis, is rigidly coupled to said second element (3) and is slidingly accommodated within a receptacle (13) provided in said first element (2); when said elements (4) are in the free rotation configuration, said pivot (12) is arranged substantially at the lower end of said receptacle (13), and when said elements (4) are in the safety configuration, said pivot (12) is arranged substantially at the upper end of said receptacle (13).

3. The hinge according to claims 1 and 2, **characterized in that** said retention means (5) comprise a profile (14), which is formed by said second element (3), and a supporting surface (16), which is provided in said first element (2); when said articulation elements (4) are in the safety configuration, said profile (14) substantially abuts against said supporting surface (16), so that the rotation of said second element (3) with respect to said first element (2) is prevented; when said articulation elements (4) are in the free rotation configuration, said profile (14) is substantially spaced from said supporting surface (16).

4. The hinge according to one or more of the preceding claims,
**characterized in that** said first element (2) is constituted by a base (6), which is affected by at least one through hole (9) for assembly by way of screw means and from which a tab (8) protrudes which forms said receptacle (13) and, in an upper region, said supporting surface (16).

5. The hinge according to one or more of the preceding claims, **characterized in that** said receptacle (13) is substantially shaped like a slot with a vertical axis.

6. The hinge according to one or more of the preceding claims, **characterized in that** said second element (3) forms at the front a protrusion (11) from which said pivot (12) protrudes laterally.

7. The hinge according to one or more of the preceding claims, **characterized in that** said profile (14) is formed by the edge of a recess (15) that is provided in said second element (3) at said protrusion (11) on the side where said pivot (12) protrudes.
